# EUROPEAN PATENT SPECIFICATION

(11) **EP 4 181 266 B1**
(45) Date of publication and mention of the grant of the patent: **21.01.2026**
(21) Application number: 21951369.4
(22) Date of filing: 30.07.2021
(51) Int. Cl.: H01M 10/42, H01M 50/209

(54) **BATTERY, POWER CONSUMING APPARATUS, AND METHOD AND APPARATUS FOR MANUFACTURING BATTERY**
BATTERIE, STROMVERBRAUCHENDES GERÄT SOWIE VERFAHREN UND VORRICHTUNG ZUR HERSTELLUNG EINER BATTERIE
BATTERIE, APPAREIL CONSOMMATEUR D'ÉNERGIE, ET PROCÉDÉ ET APPAREIL DE FABRICATION DE BATTERIE

(43) Date of publication of application: 17.05.2023
(73) Proprietor: Contemporary Amperex Technology (Hong Kong) Limited, Central, Central And Western District (HK)
(72) Inventor: YANG, Haiqi, Ningde, Fujian 352100 (CN); TANG, Yu, Ningde, Fujian 352100 (CN); ZENG, Zhimin, Ningde, Fujian 352100 (CN); HUANG, Xiaoteng, Ningde, Fujian 352100 (CN); WANG, Peng, Ningde, Fujian 352100 (CN); XU, Chenyi, Ningde, Fujian 352100 (CN)
(74) Representative: Rowlands, Stuart Michael
(86) International application number: PCT/CN2021/109708
(87) International publication number: WO 2023/004779

(56) References cited:
- WO-A1-2013/161654
- WO-A1-2014/109034
- CN-A- 111 148 382
- CN-A- 113 013 503
- CN-U- 213 782 158
- JP-A- 2009 016 285

## Description

### Technical Field

The present application relates to the technical field of batteries, and in particular to a battery, a power consuming apparatus, and a method and apparatus for manufacturing the battery.

### Background Art

With the increasing environmental pollution, the new energy industry has attracted increased attention. In the new energy industry, battery technology is a key factor in its development.

In the development of the battery technology, the problem of safety is not negligible. If the safety of batteries cannot be guaranteed, the batteries cannot be used.

When the battery is in a high-temperature and high-humidity environment, it is easy to generate condensed liquid in a case of the battery, which will cause a potential safety hazard to affect the safety of the battery. Therefore, how to enhance the safety of batteries is an urgent technical problem to be solved in the battery technology.

WO 2013/161654 A1 discloses a battery according to the state of the art.

### Summary of the Invention

Embodiments of the present application provide a battery, a power consuming apparatus, and a method and apparatus for manufacturing the battery, which can enhance the battery safety.

In a first aspect, a battery is provided, comprising: a battery cell group, comprising a plurality of battery cells; a cooling system provided on a first face of the battery cell group; a signal transmission assembly provided on a second face of the battery cell group, the second face being adjacent to the first face, the signal transmission assembly comprising a busbar component and an insulation layer, the insulation layer enclosing the busbar component, the insulation layer having holes, and the busbar component being configured to be electrically connected to the battery cells in the battery cell group at the holes; and a shielding member connected to the battery cell group and protruding from an edge of the first face, the shielding member being used to prevent condensed liquid generated by the cooling system from reaching the signal transmission assembly.

The battery according to the embodiments of the present application is provided with the cooling system on the first face, and is provided with the signal transmission assembly on the second face adjacent to the first face, so as to achieve electrical connection between the plurality of battery cells. The battery further comprises the shielding member that is connected to and protrudes from the edge of the first face, so that the condensed liquid generated by the cooling system is prevented from reaching the signal transmission assembly, thereby preventing short circuit of the battery to improve the safety of the battery.

In a possible implementation, the orthographic projection of the shielding member in a plane parallel to the first face covers the orthographic projection of the transmission assembly in the plane parallel to the first face. The shielding member extends out of the region where the signal transmission assembly is located, and thus can function as an "eave", when the cooling system generates condensed liquid, to direct the condensed liquid to the region outside the signal transmission assembly, such as a space between two battery cell groups disposed opposite to each other, so as to protect the signal transmission assembly.

In a possible implementation, a protruding portion of the shielding member that protrudes from the edge of the first face is parallel to the first face. In this way, the condensed liquid generated by the cooling system is collected in the region of the cooling system located between the shielding members of the two battery cell groups disposed opposite to each other, that is, in the region of the cooling system that is not in contact with the shielding member, thereby preventing the formation of condensed liquid directly above the signal transmission assembly so as to enhance the safety of the battery.

In a possible implementation, the protruding portion of the shielding member that protrudes from the edge of the first face is bent toward the second face. After the shielding member is bent, the condensed liquid can be drained by means of the bent portion, so that the condensed liquid is more likely to be collected in the space between the two battery cell groups so as to restrict the condensed liquid from reaching the battery cell groups.

In a possible implementation, the battery comprises a plurality of the battery cell groups, wherein the protruding portions of the shielding members of the two battery cell groups disposed opposite to each other are connected to form a recess that is used to collect the condensed liquid. The condensed liquid generated by the cooling system can be collected in the recess when dripping at the shielding member. The condensed liquid collected in the recess can be discharged when appropriate. For example, when a vehicle is going uphill or downhill, the condensed liquid in the recess is naturally discharged to the front and rear ends of the battery cell group.

**In** a possible implementation, the bottom of the recess is provided with a drain hole for discharging the condensed liquid. **In** this way, the condensed liquid collected in the recess can be discharged to the space between the two battery cell groups disposed opposite to each other so as to prevent the condensed liquid from accumulating in the recess.

**In** a possible implementation, the protruding portions of the shielding members of the two battery cell groups disposed opposite to each other are connected by means of a connecting strip to form the recess.

**In** a possible implementation, the shielding members of the two battery cell groups disposed opposite to each other are integrally formed to form the recess, thereby improving the reliability of the shielding members.

**In** a possible implementation, the shielding member is made of an insulation material, thereby ensuring the insulated isolation of the signal transmission assembly so as to further improve the safety of the battery.

**In** a possible implementation, a liquid storage groove corresponding to the shielding member is provided in a case of the battery, and the shielding member is used to introduce the condensed liquid into the liquid storage groove, so that the condensed liquid is kept away from the signal transmission assembly of the battery so as to enhance the safety of the battery.

**In** a possible implementation, an end of the recess is connected to a wall of the case of the battery, and the recess is in communication with a cavity in the wall of the case to introduce the condensed liquid into the cavity, so that the condensed liquid is kept away from the signal transmission assembly of the battery so as to enhance the safety of the battery.

**In** a possible implementation, the shielding member is fixed between the first face and the cooling system. Since the shielding member is in direct contact with the cooling system, the contact area thereof is large, so that the condensed liquid can be directed in a better way.

**In** a possible implementation, the shielding member is fixed to the second face, and the end of the shielding member that is close to the cooling system is bent to protrude from the edge of the first face. The shielding member can be fixed on the second face of the battery cell group and located in the region above the signal transmission assembly, and since the distance from the signal transmission assembly can be set close enough, has better protection effect on the signal transmission assembly.

**In** a possible implementation, the battery cell group comprises N battery cell rows, the N battery cell rows being arranged in a first direction, the battery cells in each battery cell row in the N battery cell rows are arranged in a second direction, the first direction being perpendicular to the second direction, and N being a positive integer, wherein the first face is perpendicular to the first direction, and the second face is parallel to a plane determined by the first direction and the second direction. When the first face is the face of the battery cell group having the largest area, the heat dissipation rate of the battery cell group is increased so as to achieve a better temperature regulation effect.

In a second aspect, a power consuming apparatus is provided, comprising: a battery according to the first aspect for supplying electric energy.

In a third aspect, a method for manufacturing a battery is provided, the method comprising: providing a battery cell group that comprises a plurality of battery cells; providing a cooling system that is provided on a first face of the battery cell group; providing a signal transmission assembly that is provided on a second face of the battery cell group, the second face being adjacent to the first face, the signal transmission assembly comprising a busbar component and an insulation layer, the insulation layer enclosing the busbar component, the insulation layer having holes, and the busbar component being configured to be electrically connected to the battery cells in the battery cell group at the holes; and providing a shielding member that is connected to the battery cell group and protrudes from an edge of the first face, the shielding member being used to prevent condensed liquid generated by the cooling system from reaching the signal transmission assembly.

In a fourth aspect, an apparatus for manufacturing a battery is provided, the apparatus comprising a module for performing a method according to the third aspect.

According to the technical solutions of the embodiments of the present application, in the battery, the first face thereof is provided with the cooling system, and the second face adjacent to the first face is provided with the signal transmission assembly, so as to achieve electrical connection between the plurality of battery cells. The battery further comprises the shielding member that is connected to and protrudes from the edge of the first face, so that the condensed liquid generated by the cooling system is prevented from reaching the signal transmission assembly, thereby preventing short circuit of the battery to improve the safety of the battery.

### Brief Description of the Drawings

In order to illustrate the technical solutions of the embodiments of the present application more clearly, the drawings required in the description of the embodiments of the present application will be described briefly below. Obviously, the drawings described below are merely some embodiments of the present application, and for those of ordinary skill in the art, other drawings can also be obtained from these drawings without any creative efforts.
Fig. 1 is a schematic structural diagram of a vehicle according to an embodiment of the present application;
Fig. 2 is a schematic structural diagram of a battery according to an embodiment of the present application;
Fig. 3 is a schematic structural diagram of a battery cell according to an embodiment of the present application;
Fig. 4 is a schematic structural diagram of a battery according to an embodiment of the present application;
Fig. 5 is a schematic structural diagram of some components inside a battery according to an embodiment of the present application;
Fig. 6 is a schematic exploded diagram of some components inside a battery according to an embodiment of the present application;
Fig. 7 is a schematic perspective structural diagram of some components inside a battery shown in Fig. 6;
Fig. 8 is a schematic diagram of an arrangement of battery cells in a battery cell group according to an embodiment of the present application;
Fig. 9 is a schematic structural diagram of some components inside a battery according to an embodiment of the present application;
Fig. 10 is a schematic perspective structural diagram of some components inside a battery shown in Fig. 9;
Fig. 11 is a schematic structural diagram of some components inside a battery according to an embodiment of the present application;
Fig. 12 is a schematic perspective structural diagram of some components inside a battery shown in Fig. 11;
Fig. 13 is a schematic perspective structural diagram of some components inside a battery shown in Fig. 11;
Fig. 14 is a schematic structural diagram of a recess in a battery according to an embodiment of the present application;
Fig. 15 is a schematic structural diagram of a cavity inside a battery according to an embodiment of the present application;
Fig. 16 is a schematic flow diagram of a method for manufacturing a battery according to an embodiment of the present application; and
Fig. 17 is a schematic block diagram of an apparatus for manufacturing a battery according to an embodiment of the present application.

In the drawings, the figures are not drawn to actual scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example, but should not be used to limit the scope of the present application, that is, the present application is not limited to the described embodiments.

In the description of the present application, it should be noted that all technological and scientific terms used herein have the same meanings as those commonly understood by those skilled in the art to which the present application belongs. The terms used are merely for the purpose of describing specific embodiments, and are not intended to limit the present application. The terms "comprising" and "having" and any variations thereof in the specification and the claims of the present application and in the foregoing brief description of the drawings are intended to cover non-exclusive inclusions. The term "a plurality of" means two or more. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and should not be construed as indicating or implying the relative importance. The term "perpendicular" does not mean being perpendicular in the strict sense, but within an allowable range of errors. The term "parallel" does not mean being parallel in the strict sense, but within an allowable range of errors.

In the present application, "embodiment" mentioned means that the specific features, structures, and characteristics described in conjunction with the embodiments may be included in at least one embodiment of the present application. The phrase at various locations in the specification does not necessarily refer to the same embodiment, or an independent or alternative embodiment exclusive of another embodiment. Those skilled in the art should understand explicitly or implicitly that an embodiment described in the present application can be combined with another embodiment.

The orientation terms in the following description all indicate directions shown in the drawings, but do not limit the specific structure in the present application. In the description of the present application, it should also be noted that the terms "mounting", "connecting" and "connection" should be interpreted in a broad sense, unless explicitly specified and defined otherwise, which, for example, may be a fixed connection, a detachable connection or an integral connection, or may be a direct connection, an indirect connection by means of an intermediate medium, or the internal communication between two elements. For those of ordinary skill in the art, the specific meaning of the foregoing terms in the present application can be construed according to specific circumstances.

The term "and/or" in the present application is merely a description of the associated relationship of associated objects, representing that three relationships may exist, for example, A and/or B, may be expressed as: the three instances of A alone, both A and B, and B alone. In addition, the character "/" in the present application generally indicates that the associated objects before and after the character are in a relationship of "or".

In the present application, a battery cell may include a lithium ion secondary battery, a lithium ion primary battery, a lithium-sulfur battery, a sodium/lithium ion battery, a sodium ion battery, or a magnesium ion battery, etc., which is not limited in the embodiments of the present application. The battery cell may be cylindrical, flat, cuboid or in another shape, which is not limited in the embodiments of the present application. The battery cells are generally classified into three types depending on the way of package: cylindrical battery cells, prismatic battery cells and pouch battery cells, which are also not limited in the embodiments of the present application.

A battery mentioned in the embodiments of the present application refers to a single physical module comprising one or more battery cells to provide a higher voltage and capacity. For example, the battery mentioned in the present application may comprise a battery pack, etc. The battery generally comprises a case for enclosing one or more battery cells. The case can prevent liquid or other foreign matters from affecting the charging or discharging of the battery cell.

The battery cell comprises an electrode assembly and an electrolytic solution, the electrode assembly being composed of a positive electrode plate, a negative electrode plate, and a separator. The battery cells operate mainly by means of metal ions moving between the positive electrode plate and the negative electrode plate. The positive electrode plate comprises a positive electrode current collector and a positive electrode active material layer, the positive electrode active material layer being coated on a surface of the positive electrode current collector, with the current collector not coated with the positive electrode active material layer protruding from the current collector coated with the positive electrode active material layer, and the current collector not coated with the positive electrode active material layer serving as a positive electrode tab. Taking a lithium ion battery as an example, the positive electrode current collector may be made of aluminum, and a positive electrode active material may be lithium cobalt oxide, lithium iron phosphate, ternary lithium, lithium manganate, etc. The negative electrode plate comprises a negative electrode current collector and a negative electrode active material layer, the negative electrode active material layer being coated on a surface of the negative electrode current collector, the current collector not coated with the negative electrode active material layer protruding from the current collector coated with the negative electrode active material layer, and the current collector not coated with the negative electrode active material layer serving as a negative electrode tab. The negative electrode current collector may be made of copper, and a negative electrode active material may be carbon, silicon, etc. In order to ensure that no fusing occurs when a large current passes, multiple positive electrode tabs are provided and are stacked together, and a plurality of negative electrode tabs are provided and are stacked together. The separator may be made of polypropylene (PP), polyethylene (PE), etc. In addition, the electrode assembly may be of a wound structure or a laminated structure, which is not limited in the embodiments of the present application.

The battery may comprise a plurality of battery cells in order to meet different power demands, with the plurality of battery cells being in series connection, parallel connection, or series-parallel connection. The series-parallel connection refers to a combination of series connection and parallel connection. Optionally, the plurality of battery cells may be in series connection or in parallel connection or in series-parallel connection to constitute a battery module, and then a plurality of battery modules may in series connection or in parallel connection or in series-parallel connection to constitute the battery. That is to say, the plurality of battery cells may directly form a battery, or may form battery modules that may then form a battery. The battery is further provided in a power consuming apparatus to supply electric energy to the power consuming apparatus.

The development of battery technology needs to consider many design factors at the same time, such as energy density, cycle life, discharge capacity, charge-discharge rate, and other performance parameters, and also needs to consider the safety of the battery.

For battery cells, the main safety hazard comes from the charging and discharging process, and thus a proper temperature design is also provided. **In** order to control the battery cells to be at a proper temperature, a cooling system may be provided in the battery. The cooling system is used to accommodate a cooling medium to cool the battery cells. The cooling system may also be referred to as a cooling component, a cooling plate, etc., and the cooling medium may also be referred to as a cooling fluid, and more specifically, may be referred to as a cooling liquid or a cooling gas. The cooling fluid circulates to achieve a better temperature regulation effect. Optionally, the cooling medium may be water, a mixture of water and ethylene glycol, air, etc. If the cooling medium is water, the cooling system may also be referred to as a water cooling plate.

**In** the case of the battery, in addition to the battery cells and the cooling system mentioned above, a signal transmission assembly and other components of the battery may also be included. **In** some embodiments, a structure for fixing the battery cells may further be provided in the case. The case may be shaped depending on the plurality of battery cells accommodated. **In** some embodiments, the case may be square with six walls.

It should be understood that the signal transmission assembly according to the embodiments of the present application can be used for transmission of signals of voltage and/or temperature, etc. of battery cells. The signal transmission assembly may comprise a busbar component that is used to achieve electrical connection, such as parallel connection or series connection or series-parallel connection, between the plurality of battery cells. The busbar component may achieve the electrical connection between the battery cells by means of connecting electrode terminals of the battery cells. **In** some embodiments, the busbar component may be fixed to the electrode terminals of the battery cells by means of welding. The busbar component transmits the voltage of the battery cells, a higher voltage will be obtained after the plurality of battery cells are connected in series, and accordingly, the electrical connection formed by the busbar component may also be referred to as "high-voltage connection".

**In** addition to the busbar component, the signal transmission assembly may further comprise a sensing device for sensing the state of the battery cells, for example, the sensing device may be used for the measurement and transmission of sensing signals such as the temperature and the state of charge of the battery cells. **In** the embodiments of the present application, the electrical connection components in the battery may include the busbar component and/or the sensing device.

The busbar component and the sensing device may be enclosed in an insulation layer to form the signal transmission assembly. Accordingly, the signal transmission assembly may be used for transmission of the voltage and/or sensing signals of the battery cells. The signal transmission assembly has no insulation layer at the connections with the electrode terminals of the battery cells, that is, the insulation layer has holes at the connections and is thus connected to the electrode terminals of the battery cells.

It is considered that when the battery is in a high-temperature and high-humidity environment, it is easy to generate condensed liquid in the case of the battery, causing a safety hazard to the signal transmission assembly in the battery, which may lead to an electrical connection fault and the failure of the signal transmission assembly and thus affect the safety of the battery. Specifically, when the high-temperature and high-humidity gas in the battery meets the cooling system in the case of the battery, condensed liquid may be generated and may affect the safety of the battery if it drips to electrical connection regions in the battery.

**In** view of this, the present application provides a technical solution, in which a shielding member is provided at the edge of a face of the battery where the cooling system is provided, so that the condensed liquid generated by the cooling system is prevented from reaching the region of electrical connection with the battery, so as to enhance the safety of the battery.

**In** the battery, in addition to the components mentioned above, a pressure balancing mechanism may be provided on the case of the battery for balancing the pressure inside and outside the case. For example, when the pressure inside the case is higher than outside the case, the gas inside the case can flow out of the case by means of the pressure balancing mechanism; and when the pressure inside the case is lower than outside the case, the gas outside the case can flow into the case by means of the pressure balancing mechanism.

It should be understood that the components in the battery case described above should not be construed as a limitation on the embodiments of the present application, that is to say, the case for the battery of the embodiments of the present application may or may not comprise the components described above.

The technical solutions described in the embodiments of the present application are all applicable to various devices using a battery, such as mobile phones, portable apparatuses, laptops, battery cars, electric toys, electric tools, electric vehicles, ships, and spacecraft. For example, spacecraft includes airplanes, rockets, space shuttles, space vehicles, etc.

It should be understood that the technical solutions described in the embodiments of the present application are not only applicable to the devices described above, but also applicable to all apparatuses using a battery. However, for the sake of brevity of description, the following embodiments will be described taking an electric vehicle as an example.

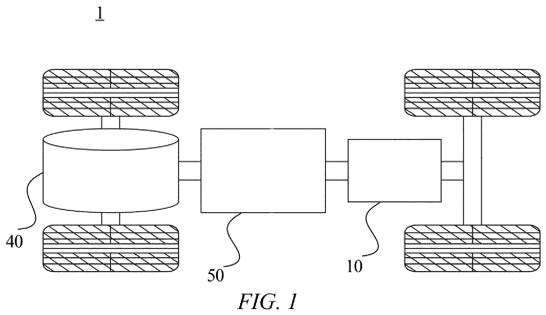

For example, Fig. 1 shows a schematic structural diagram of a vehicle 1 according to an embodiment of the present application. The vehicle 1 may be a fuel vehicle, a gas vehicle, or a new-energy vehicle. The new-energy vehicle may be a battery electric vehicle, a hybrid vehicle, an extended-range vehicle, etc. The interior of the vehicle 1 may be provided with a motor 40, a controller 50 and a battery 10. The controller 50 is used to control the battery 10 to supply power to the motor 40. For example, the battery 10 may be provided at the bottom or the head or the tail of the vehicle 1. The battery 10 may be used to supply power to the vehicle 1. For example, the battery 10 can serve as a power source for operating the vehicle 1 for use in a circuit system of the vehicle 1, for example, to meet the working power demand of the vehicle 1 during startup, navigation and running. In another embodiment of the present application, the battery 10 can not only serve as a power source for operating the vehicle 1, but also serve as a power source for driving the vehicle 1, instead of or partially instead of fuel or natural gas, to provide driving power for the vehicle 1.

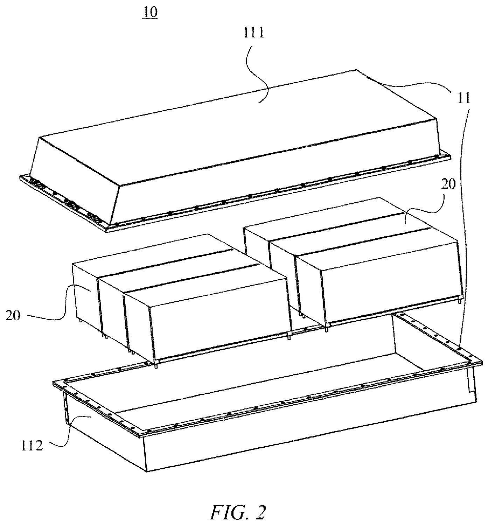

The battery 10 may comprise a plurality of battery cells in order to meet different power demands. For example, Fig. 2 shows a schematic structural diagram of a battery 10 according to an embodiment of the present application. The battery 10 may comprise at least one battery module 200. The battery module 200 comprises a plurality of battery cells 20. The battery 10 may further comprise a case 11. The case 11 has a hollow structure inside, and the plurality of battery cells 20 are accommodated in the case 11. As shown in Fig. 2, the case 11 may comprise two portions, respectively referred to herein as a first portion 111 (an upper case) and a second portion 112 (a lower case). The first portion 111 and the second portion 112 are snap-fitted together. The first portion 111 and the second portion 112 may be shaped depending on the shape of a combination of the plurality of battery cells 20, and at least one of the first portion 111 and the second portion 112 has an opening. For example, as shown in Fig. 2, the first portion 111 and the second portion 112 may both be a hollow cuboid and each have only one open face, an opening of the first portion 111 and an opening of the second portion 112 are disposed opposite to each other, and the first portion 111 and the second portion 112 are snap-fitted to each other to form the case 11 having an enclosed chamber. For another example, different from what is shown in Fig. 2, only one of the first portion 111 and the second portion 112 may be a hollow cuboid having an opening, and the other may be plate-shaped to cover the opening. For example, taking an example here in which the second portion 112 is a hollow cuboid and has only one open face, while the first portion 111 is plate-shaped, the first portion 111 covers the opening of the second portion 112 to form a case having an enclosed chamber that can be used to accommodate the plurality of battery cells 20. The plurality of battery cells 20 are combined in parallel connection or in series connection or in series-parallel connection, and then placed in the case 11 that is formed after the first portion 111 and the second portion 112 are snap-fitted together.

Optionally, the battery 10 may further comprise other structures, which will not be described in detail herein. For example, the battery 10 may further comprise a busbar component that are used to achieve electrical connection, such as parallel connection or series connection or series-parallel connection, between the plurality of battery cells 20. Specifically, the busbar component may achieve the electrical connection between the battery cells 20 by means of connecting electrode terminals of the battery cells 20. Further, the busbar component may be fixed to the electrode terminals of the battery cells 20 by means of welding. The electric energy of the plurality of battery cells 20 may be further extracted by means of an electrically conductive mechanism passing through the case. Optionally, the electrically conductive mechanism may also be a busbar component.

The number of the battery cells 20 may be set as any value depending on different power demands. The plurality of battery cells 20 may be in series connection, in parallel connection or in series-parallel connection to achieve higher capacity or power. Since each battery 10 may comprise a large number of the battery cells 20. For ease of mounting, the battery cells 20 may be provided in groups, and each group of battery cells 20 forms a battery module. The number of the battery cells 20 included in the battery module is not limited and may be set as required. The battery may comprise a plurality of battery modules that may be in series connection, in parallel connection or in series-parallel connection.

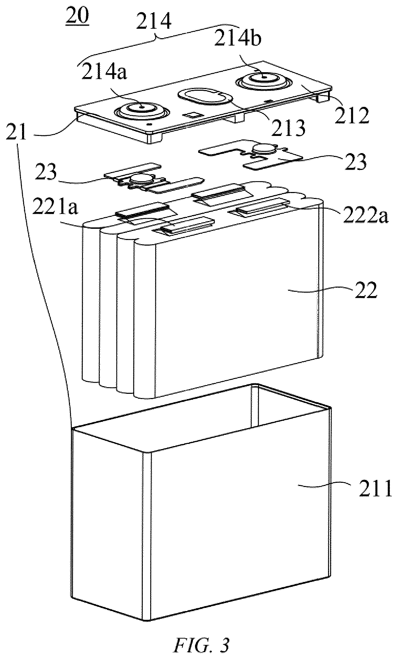

Fig. 3 shows a schematic structural diagram of a battery cell 20 according to an embodiment of the present application. The battery cell 20 comprises one or more electrode assemblies 22, a housing 211, and an end cap 212. The housing 211 and the end cap 212 form a shell or a battery box 21. Walls of the housing 211 and the end cap 212 are both referred to as walls of the battery cell 20. For a cuboid battery cell 20, the walls of the housing 211 include a bottom wall and four side walls. The housing 211 may be determined depending on the shape of a combination of the one or more electrode assemblies 22, for example, the housing 211 may be a hollow cuboid, cube, or cylinder, with one of the faces of the housing 211 having an opening such that the one or more electrode assemblies 22 can be disposed in the housing 211. For example, when the housing 211 is a hollow cuboid or cube, one of the flat faces of the housing 211 is an open face, that is, this flat face has no wall such that the inside of the housing 211 is in communication with the outside. When the housing 211 may be a hollow cylinder, an end face of the housing 211 is an open face, that is, this end face has no wall such that the inside of the housing 211 is in communication with the outside. The end cap 212 covers the opening and is connected to the housing 211 to form an enclosed chamber in which the electrode assemblies 22 are disposed. The housing 211 is filled with an electrolyte, such as an electrolytic solution.

The battery cell 20 may further comprise two electrode terminals 214. The two electrode terminals 214 may be provided on the end cap 212. The end cap 212 is generally in the form of a flat plate, the two electrode terminals 214 are fixed to a flat plate face of the end cap 212, and the two electrode terminals 214 are respectively a positive electrode terminal 214a and a negative electrode terminal 214b. Each electrode terminal 214 is correspondingly provided with a connecting member 23 which, also referred to as a current collecting member 23, is located between the end cap 212 and the electrode assembly 22 to achieve the electrical connection between the electrode assembly 22 and the electrode terminal 214.

As shown in Fig. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tab 221a of the one or more electrode assemblies 22 is connected to an electrode terminal by means of a connecting member 23, and the second tab 222a of the one or more electrode assemblies 22 is connected to the other electrode terminal by means of the other connecting member 23. For example, the positive electrode terminal 214a is connected to the positive electrode tab by means of a connecting member 23, and the negative electrode terminal 214b is connected to the negative electrode tab by means of another connecting member 23.

In the battery cell 20, according to the demands in actual use, one or more electrode assemblies 22 may be provided. As shown in Fig. 3, four independent electrode assemblies 22 are provided in the battery cell 20.

A pressure relief mechanism 213 may also be provided on the battery cell 20. The pressure relief mechanism 213 is used to be actuated, when the internal pressure or temperature of the battery cell 20 reaches a threshold, to relieve the internal pressure or temperature.

The pressure relief mechanism 213 may be of a variety of possible pressure relief structures, which are not limited in the embodiments of the present application. For example, the pressure relief mechanism 213 may be a temperature-sensitive pressure relief mechanism that is configured to melt when the internal temperature of the battery cell 20 provided with the pressure relief mechanism 213 reaches a threshold; and/or the pressure relief mechanism 213 may be a pressure-sensitive pressure relief mechanism that is configured to fracture when the internal gas pressure of the battery cell 20 provided with the pressure relief mechanism 213 reaches a threshold.

It should be understood that the plurality of battery cells 20 included in the battery 10 according to an embodiment of the present application may be arranged and placed in the case 11 in any direction. For example, taking the battery cells 20 in the shape of a cuboid as shown in Fig. 3 as an example, as shown in Fig. 2, the plurality of battery cells 20 can be mounted in the case in a vertical direction as shown in Fig. 3, so that after being mounted, the end caps 212 of the plurality of battery cells 20 face the upper case 111, and the bottom walls of the housings 211 of the battery cells 20 face the lower case 112. For another example, different from Fig. 2, a plurality of battery cells 20 as shown in Fig. 3 may also be laterally disposed in the case.

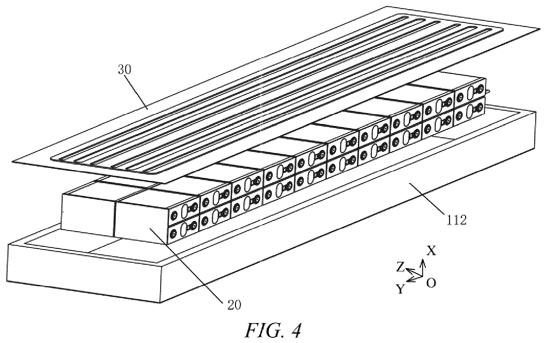

Specifically, Fig. 4 shows another exploded schematic diagram of a battery 10 according to an embodiment of the present application. As shown in Fig. 4, a plurality of battery cells 20 may be laterally disposed in the case. As shown in Fig. 4, the battery 10 may comprise a plurality of battery cells 20. The plurality of battery cells 20 may be arranged in multiple layers, for example, taking two layers of battery cells 20 as an example shown in Fig. 4. For the uppermost layer of battery cells 20 in the battery 10, the side wall with the largest area among the side walls of the battery cells 20 in the uppermost layer faces the opening of the lower case 112, that is, faces the upper case 111 (not shown in Fig. 4); and on the contrary, for the lowermost layer of battery cells 20 in the battery 10, the side wall with the largest area among the side walls of the battery cells 20 in the lowermost layer faces the bottom wall of the lower case 112, that is, faces the wall of the lower case 112 opposite the opening. That is to say, as shown in Figs. 3 and 4, one end of the end caps 212 of the plurality of battery cells 20 faces the side wall of the lower case 112, that is, faces the wall of the lower case 112 adjacent to the opening. In this way, compared with the mounting method of the battery cells 20 shown in Fig. 2, the mounting method shown in Fig. 4 is more conducive to the heat dissipation of the battery cells 20.

In order to further control that the battery cells 20 can work at a suitable temperature, a cooling system 30 may also be provided in the battery 10 to ensure the temperature of the battery 10. Specifically, as shown in Fig. 4, the cooling system 30 may be provided above the plurality of battery cells 20, so that the side walls of the battery cells 20 with a large area face the cooling system 30, so as to increase the heat dissipation area of the battery cells 20, which is more conducive to the heat dissipation of the battery cells 20.

Optionally, an upper case 111 may be provided above the cooling system 30, so that the upper case 111 and the lower case 112 are snap-fitted together, thereby forming the case of the battery 10; or the cooling system 30 may be integrated into the upper case 111 to reduce the space occupied, that is, the cooling system 30 can serve as the upper case 111 that is snap-fitted with the lower case 112 to form the case 11 of the battery 10.

When the battery 10 is in a high-temperature and high-humidity environment, it is easy to generate condensed liquid in the case, especially on the surface of and around the cooling system 30, and thus for the mounting method of the battery cells as shown in Fig. 4, when the condensed liquid generated by the cooling system 30 drips, it is likely to cause a safety hazard to the electrical connection regions in the battery 10 to affect the safety of the battery 10. Specifically, when the high-temperature and high-humidity gas in the battery 10 meets the cooling system 30 in the case 11 of the battery 10, condensed liquid may be generated and may affect the safety of the battery 10 if it drips to the electrical connection regions in the battery 10.

Therefore, an embodiment of the present application provides a battery 10, which can solve the problem mentioned above.

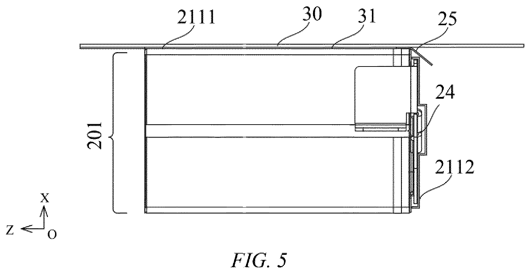

Fig. 5 shows a schematic structural diagram of a battery 10 according to an embodiment of the present application. As shown in Fig. 5, the battery 10 according to an embodiment of the present application may comprise a plurality of battery cell groups 201. Optionally, the battery 10 may comprise a plurality of the battery cell groups 201. For any one of the battery cell groups 201, the battery cell group 201 may comprise a plurality of battery cells 20.

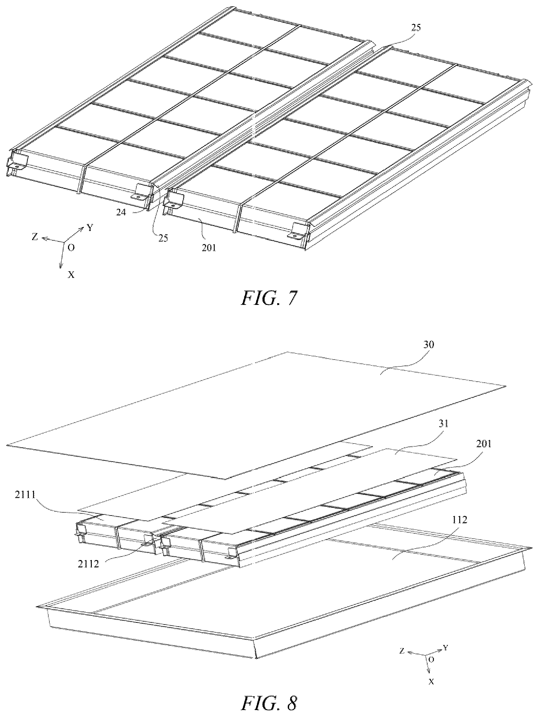

Specifically, for any one battery cell group 201, the plurality of battery cells 20 therein can be arranged in many ways. For example, as shown in Figs. 7 and 8, the battery cell group 201 may comprise multiple battery cell rows, and the multiple battery cell rows are arranged in a first direction X. Four battery cell groups 201 are shown in Figs. 7 and 8, and each battery cell group 201 comprises two battery cell rows. The battery cells 20 in each of the multiple battery cell rows may be arranged in a second direction Y, the first direction X being perpendicular to the second direction Y.

The battery 10 further comprises a cooling system 30. The cooling system 30 is used to accommodate a cooling medium to cool the battery cells 20. As shown in Figs. 5 and 8, the cooling system 30 may be provided on a first face 2111 of the battery cell group 201. It should be understood that the first face 2111 may refer to any surface of the battery cell group 201 according to the different directions in which the plurality of battery cells 20 are provided in the case 11 of the battery 10. Taking the battery cell 20 being a cuboid as an example, in order to improve the heat dissipation capability of the battery cell 20, the cooling system 30 can be provided above the side wall with the largest area, then the side of the battery cell group 201 facing the cooling system 30, i.e., the first face 2111, is the face of the battery cell group 201 having the largest area, which can increase the heat dissipation rate of the battery cell group 201 to achieve a better temperature regulation effect. Optionally, as shown in Fig. 8, the battery cell group 201 and the cooling system 30 may be bonded together by structural adhesive 31.

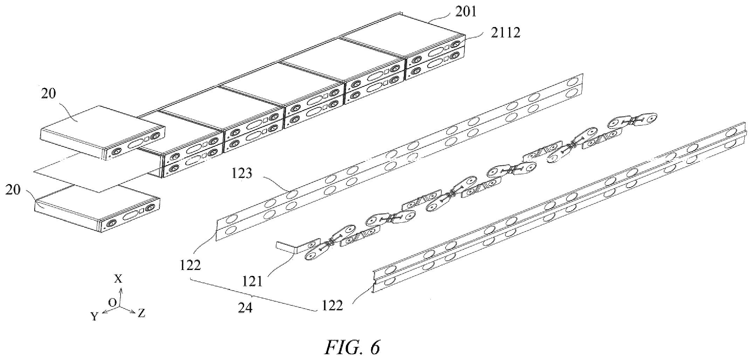

The battery 10 further comprises a signal transmission assembly 24. The signal transmission assembly 24 is provided on a second face 2112 of the battery cell group 201. The second face 2112 is adjacent to the first face 2111. Specifically, the signal transmission assembly 24 may be used to achieve the transmission of voltage and/or temperature signals of the battery cells 20. For example, as shown in Fig. 6, the signal transmission assembly 24 may comprise a busbar component 121 and an insulation layer 122, the insulation layer 122 being used to enclose the busbar component 121, the insulation layer 122 having holes 123, and the busbar component 121 being configured to be electrically connected to the battery cells 20 in the battery cell group 201 at the holes 123.

Optionally, the insulation layer 122 can enclose the busbar component 121 by means of hot pressing, and by means of providing the holes, the electrical connection between the battery cells 20 in the battery cell group 201 at the holes can be achieved by means of the busbar component 121.

The signal transmission assembly 24 can be used to achieve various forms of electrical connection between the battery cells 20. For example, the electrical connection regions in the battery 10 may include electrical connection regions formed by the busbar component 121. In addition, a sensing device (not shown) for sensing the state of the battery cells 20 may also be provided in the battery 10, and the electrical connection regions in the battery 10 may also include electrical connection regions in the sensing device. Optionally, the signal transmission assembly 24 may comprise a sensing device, and the insulation layer 122 may also be used to enclose the sensing device.

Considering the arrangement of the battery cells 20 and the cooling system 30 as shown in Fig. 5, when the battery 10 is in a high-temperature and high-humidity environment, it is easy to generate condensed liquid in the case of the battery 10, especially the condensation generated on the cooling system 30 may drip onto the electrical connection regions in the battery 10, for example, may drip onto the busbar component 121, which may cause short circuit and failure of the battery 10 to affect the safety of the battery. Therefore, as shown in Fig. 5, the battery 10 may further comprise a shielding member 25. The shielding member 25 is connected to the battery cell group 201 and protrudes from the edge of the first face 2111, and the shielding member 25 is used to prevent the condensed liquid generated by the cooling system 30 from reaching the signal transmission assembly 24. Specifically, the shielding member 25 may be connected to the first face 2111 or the second face 2112 of the battery cell group 201.

Therefore, in the battery 10 according to an embodiment of the present application, the first face 2111 thereof is provided with the cooling system 30, and the second face 2112 adjacent to the first face 2111 is provided with the signal transmission assembly 24, so as to achieve electrical connection between the plurality of battery cells 20. In addition, the battery 10 further comprises the shielding member 25 that is connected to and protrudes from the edge of the first face 2111, so that the condensed liquid generated by the cooling system 30 is prevented from reaching the signal transmission assembly 24, thereby preventing short circuit of the battery 10 to improve the safety of the battery 10.

Optionally, in an embodiment of the present application, the orthographic projection of the shielding member 25 in a plane parallel to the first face 2111 covers the orthographic projection of the signal transmission assembly 24 in the plane parallel to the first face 2111. That is to say, the shielding member 25 extends out of the region corresponding to the signal transmission assembly 24, and thus the shielding member 25 can act as an "eave", when the cooling system 30 generates condensed liquid, to direct the condensed liquid to the region outside the signal transmission assembly 24, such as a space between two battery cell groups 201 disposed opposite to each other, so as to protect the signal transmission assembly 24.

Optionally, in an embodiment of the present application, the shielding member 25 is made of an insulation material, for example, the shielding member 25 may be an insulating sheet, thereby ensuring the insulated isolation of the signal transmission assembly 24 so as to further improve the safety of the battery 10.

Optionally, in an embodiment of the present application, the shielding member 25 may be fixed between the first face 2111 and the cooling system 30. The shielding member 25 does not need to cover the entire first face 2111 of the battery cell group 201. For example, as shown in Fig. 5, the shielding member 25 is fixed between the first face 2111 of the battery cell group 201 and the cooling system 30 and only contacts the first face 2111 at a position close to the edge, and one end of the shielding member 25 is aligned with the structural adhesive 31, which will not affect the bonding of the structural adhesive 31 to the battery cell group 201 and the cooling system 30. Also, the shielding member 25 is in direct contact with the cooling system 30, and the contact area thereof is large, so that the condensed liquid can be directed in a better way.

Optionally, in an embodiment of the present application, the shielding member 25 may also be fixed to the second face 2112 of the battery cell group 201, and the end of the shielding member 25 that is close to the cooling system 30 is bent to protrude from the edge of the first face 2111. The shielding member 25 may be fixed on the second face 2112 of the battery cell group 201 and located in the region above the signal transmission assembly 24, and since the distance from the signal transmission assembly 24 can be set close enough, has better protection effect on the signal transmission assembly 24. The shielding member 25 fixed to the second face 2112 may be formed as one piece, or may be composed of a plurality of sub-shielding members. Specifically, the shielding member 25 comprises a plurality of sub-shielding members respectively provided on first walls of the plurality of battery cells 20 in the first battery cell row, with the first battery cell row being the battery cell row in the battery cell group 201 connected to the cooling system 30, and the first wall being the wall of the battery cell 20 on the second face 2112.

The shielding member 25 can be mounted in any way, as long as the shielding member 25 can form a shield above the signal transmission assembly 24 to prevent the condensed liquid generated by the cooling system 30 from reaching the signal transmission assembly 24. The embodiment of the present application will be described taking the shielding member 25 being fixed between the first face 2111 of the battery cell group 201 and the cooling system 30, as an example.

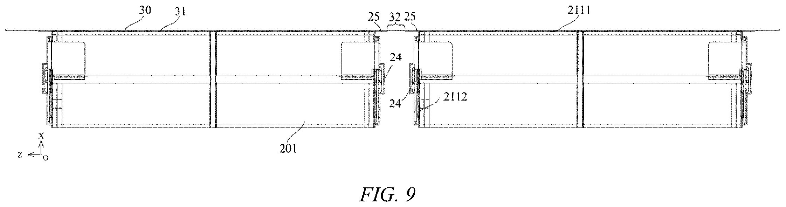

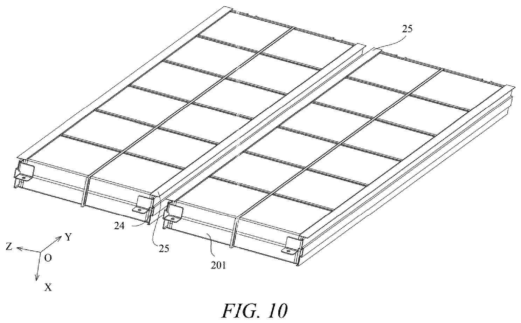

Optionally, in an embodiment of the present application, as shown in Figs. 9 and 10, the protruding portion of the shielding member 25 that protrudes from the edge of the first face 2111 is parallel to the first face 2111. In this way, the condensed liquid generated by the cooling system 30 is collected in the region 32 of the cooling system 30 located between the shielding members 25 of the two battery cell groups 201 disposed opposite to each other, that is, in the region 32 of the cooling system 30 that is not in contact with the shielding member 25, thereby preventing the formation of condensed liquid directly above the signal transmission assembly 24 so as to enhance the safety of the battery. In this way, the shielding member 25 is of a plane structure, and the process complexity is low.

Optionally, in an embodiment of the present application, as shown in Figs. 5 and 7, the protruding portion of the shielding member 25 that protrudes from the edge of the first face 2111 is bent toward the second face 2112. After the shielding member 25 is bent, the condensed liquid can be drained by means of the bent portion, so that the condensed liquid is more likely to be collected in the space between the two battery cell groups 201 so as to restrict the condensed liquid from reaching the signal transmission assembly 24.

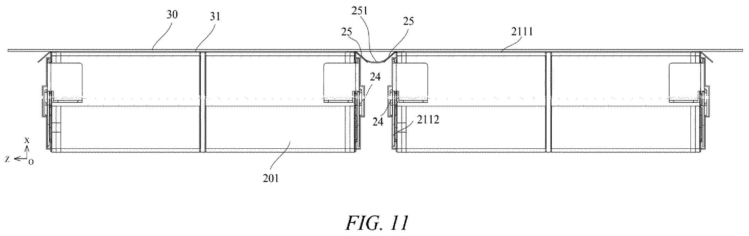

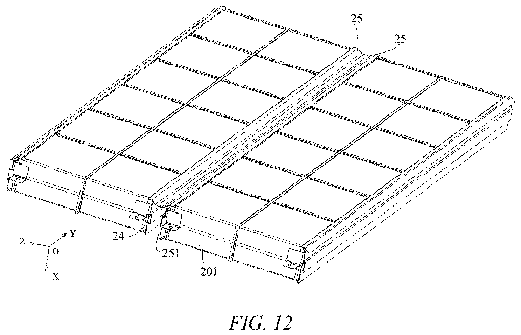

Further, in an embodiment of the present application, as shown in Figs. 11 and 12, the protruding portions of the shielding members 25 of the two battery cell groups 201 disposed opposite to each other are connected to form a recess 251. The recess 251 is used to collect the condensed liquid. The depth of the recess 251 may be determined depending on the degree of bending of the shielding member 25. The condensed liquid generated by the cooling system 30 can be collected in the recess 251 when dripping at the shielding member 25. The condensed liquid collected in the recess 251 can be discharged when appropriate. For example, when a vehicle is going uphill or downhill, the condensed liquid in the recess 251 is naturally discharged to the rear end or the front end of the battery cell group 201. Optionally, the protruding portions of the shielding members 25 of the two battery cell groups 201 disposed opposite to each other can be connected by means of a connecting strip (not shown) to form the recess 251. Alternatively, the shielding members 25 of the two battery cell groups 201 disposed opposite to each other may be integrally formed to form the recess 251, thereby improving the reliability of the shielding members 25.

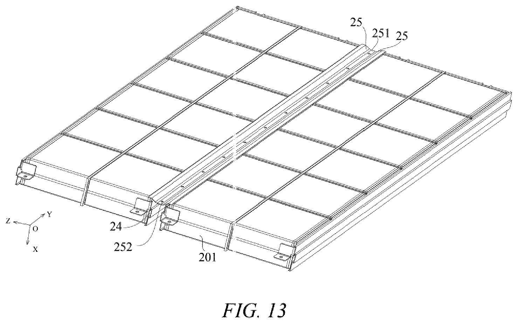

Still further, in an embodiment of the present application, as shown in Fig. 13, the bottom of the recess 251 is provided with a drain hole 252, and the drain hole 252 is used to drain the condensed liquid. In this way, the condensed liquid collected in the recess 251 can be discharged to the space between the two battery cell groups 201 disposed opposite to each other so as to prevent the condensed liquid from excessively accumulating in the recess 251. The number and shape of the drain holes 252 are not limited in the embodiment of the present application.

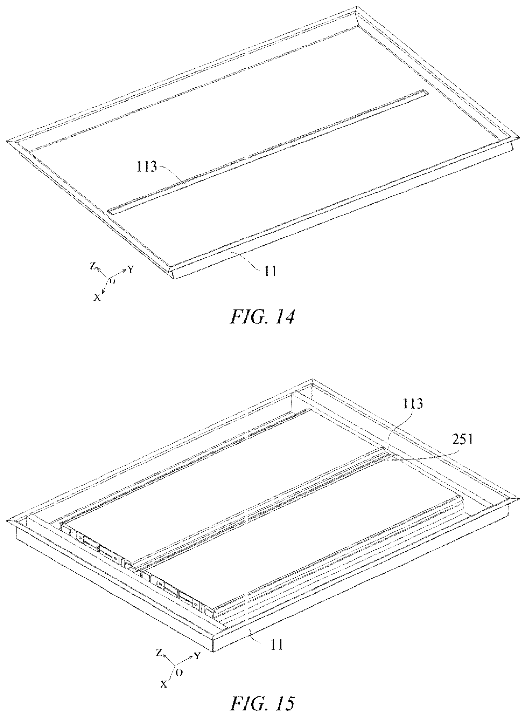

Optionally, in an embodiment of the present application, as shown in Fig. 14, a liquid storage groove 113 corresponding to the shielding member 25 is provided in the case 11 of the battery 10, and the shielding member 25 is used to introduce the condensed liquid into the liquid storage groove 113. When the cooling system 30 generates condensed liquid, the condensed liquid drips into the liquid storage groove 113 along the shielding member 25, or firstly drips into the recess 251, and then the condensed liquid in the recess 251 is introduced into the liquid storage groove 113, so that the condensed liquid is kept away from the signal transmission assembly 24 of the battery 10, thereby enhancing the safety of the battery. The liquid storage groove 113 may be located at the bottom of the case 11. Optionally, a gravity valve may be provided in the liquid storage groove 113, and the gravity valve is used to drain the condensed liquid out of the case 11 from the liquid storage groove 113 when the condensed liquid in the liquid storage groove 113 accumulates to a certain extent. Optionally, the liquid storage groove 113 may not be provided with a gravity valve, but directly communicate with the outside of the case 11, for example, communicate with the outside of the case 11 through a through hole in the wall of the case 11.

Optionally, in an embodiment of the present application, as shown in Fig. 15, an end of the recess 251 is connected to a wall of the case 11 of the battery 10, and the recess 251 is in communication with a cavity in the wall of the case 11 to introduce the condensed liquid into the cavity. The cavity may be an existing cavity in the wall of the case 11. Optionally, the cavity may also a specially provided liquid storage groove 113 as shown in Fig. 15. Since the end of the recess 251 is connected to the cavity in the wall of the case 11 of the battery 10, when the cooling system 30 generates the condensed liquid, the condensed liquid drips into the recess 251 along the bend of the shielding member 25, the condensed liquid is introduced into the cavity in the wall of the case 11 from the end of the recess 251 to store the condensed liquid, or is further drained out of the case 11, so that the condensed liquid is kept away from the signal transmission assembly 24 of the battery 10, thereby enhancing the safety of the battery 10.

An embodiment of the present application further provides a power consuming apparatus that may comprise the battery 10 according to the foregoing embodiments for supplying electric energy to the power consuming apparatus. Optionally, the power consuming apparatus may be a vehicle 1, a ship or a spacecraft.

The battery and the power consuming apparatus according to the embodiments of the present application are described above, and a method and apparatus for manufacturing a battery according to the embodiments of the present application will be described below. For the parts not described in detail, reference can be made to the foregoing embodiments.

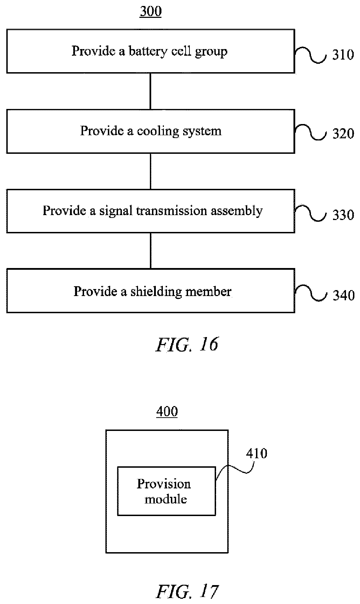

Fig. 16 shows a schematic flow diagram of a method 300 for manufacturing a battery according to an embodiment of the present application. As shown in Fig. 16, the method 300 may comprise: 310, providing a battery cell group 201, the battery cell group 201 comprising a plurality of battery cells 20; 320, providing a cooling system 30 that is provided on a first face 2111 of the battery cell group 201; 330, providing a signal transmission assembly 24 that is provided on a second face 2112 of the battery cell group 201, the second face 2112 being adjacent to the first face 2111, the signal transmission assembly 24 comprising a busbar component 121 and an insulation layer 122, the insulation layer 122 enclosing the busbar component 121, the insulation layer 122 having holes, and the busbar component 121 being configured to be electrically connected to the battery cells 20 in the battery cell group 201 at the holes; and 340, providing a shielding member 25 that is connected to the battery cell group 201 and protrudes from an edge of the first face 2111, the shielding member 25 being used to prevent condensed liquid generated by the cooling system 30 from reaching the signal transmission assembly 24.

Fig. 17 shows a schematic block diagram of an apparatus 400 for manufacturing a battery according to an embodiment of the present application. As shown in Fig. 17, the apparatus 400 for manufacturing a battery may comprise providing a provision module 410 that is used for: providing a battery cell group 201, the battery cell group 201 comprising a plurality of battery cells 20; providing a cooling system 30 that is provided on a first face 2111 of the battery cell group 201; providing a signal transmission assembly 24 that is provided on a second face 2112 of the battery cell group 201, the second face 2112 being adjacent to the first face 2111, the signal transmission assembly 24 comprising a busbar component 121 and an insulation layer 122, the insulation layer 122 enclosing the busbar component 121, the insulation layer 122 having holes, and the busbar component 121 being configured to be electrically connected to the battery cells 20 in the battery cell group 201 at the holes; and providing a shielding member 25 that is connected to the battery cell group 201 and protrudes from an edge of the first face 2111, the shielding member 25 being used to prevent condensed liquid generated by the cooling system 30 from reaching the signal transmission assembly 24.

While the present application has been described with reference to the preferred embodiments, various modifications can be made without departing from the scope of the present application.

## Claims

1. A battery, comprising:
a battery cell group (201) comprising a plurality of battery cells (20);
a cooling system (30) provided on a first face (2111) of the battery cell group (201);
a signal transmission assembly (24) provided on a second face (2112) of the battery cell group (201), the second face (2112) being adjacent to the first face (2111), the signal transmission assembly (24) comprising a busbar component (121) and an insulation layer (122), the insulation layer (122) enclosing the busbar component (121), the insulation layer (122) having holes, and the busbar component (121) being configured to be electrically connected to the battery cells (20) in the battery cell group (201) at the holes; and
a shielding member (25) connected to the battery cell group (201) and protruding from an edge of the first face (2111), the shielding member (25) being used to prevent condensed liquid generated by the cooling system (30) from reaching the signal transmission assembly (24).

2. The battery according to claim 1, wherein the orthographic projection of the shielding member (25) in a plane parallel to the first face (2111) covers the orthographic projection of the signal transmission assembly (24) in the plane parallel to the first face (2111).

3. The battery according to claim 1 or 2, wherein a protruding portion of the shielding member (25) that protrudes from the edge of the first face (2111) is either parallel to the first face (2111) or

4. The battery according to claim 1 or 2, wherein the protruding portion of the shielding member (25) that protrudes from the edge of the first face (2111) is bent toward the second face (2112) E.g. original claim 4 and the battery comprises a plurality of the battery cell groups (201),
wherein the protruding portions of the shielding members (25) of the two battery cell groups (201) disposed opposite to each other are connected to form a recess (251), the recess (251) being used to collect the condensed liquid.

5. The battery according to claim 4, wherein the bottom of the recess (251) is provided with a drain hole (252) for discharging the condensed liquid.

6. The battery according to claim 4 or 5, wherein the protruding portions of the shielding members (25) of the two battery cell groups (201) disposed opposite to each other are connected by means of a connecting strip to form the recess (251).

7. The battery according to claim 4 or 5, wherein the shielding members (25) of the two battery cell groups (201) disposed opposite to each other are integrally formed to form the recess (251).

8. The battery according to any one of claims 1 to 7, wherein the shielding member (25) is made of an insulation material.

9. The battery according to any one of claims 1 to 8, wherein a liquid storage groove (113) corresponding to the shielding member (25) is provided in a case of the battery, and the shielding member (25) is used to introduce the condensed liquid into the liquid storage groove (113).

10. The battery according to claim 4, wherein an end of the recess (251) is connected to a wall of the case of the battery, and the recess (251) is in communication with a cavity (114) in the wall of the case to introduce the condensed liquid into the cavity (114).

11. The battery according to any one of claims 1 to 10, wherein
the shielding member (25) is fixed between the first face (2111) and the cooling system (30); or the shielding member (25) is fixed to the second face (2112), and the end of the shielding member (25) that is close to the cooling system (30) is bent to protrude from the edge of the first face (2111).

12. The battery according to any one of claims 1 to 11, **characterized in that** the battery cell group (201) comprises N battery cell rows (20), the N battery cell rows (20) being arranged in a first direction, the battery cells (20) in each battery cell row (20) in the N battery cell rows (20) are arranged in a second direction, the first direction being perpendicular to the second direction, and N being a positive integer,
wherein the first face (2111) is perpendicular to the first direction, and the second face (2112) is parallel to a plane determined by the first direction and the second direction.

13. A power consuming apparatus, **characterized by** comprising a battery according to any one of claims 1 to 12 for supplying electric energy.

14. A method for manufacturing a battery, **characterized by** comprising:
providing (310) a battery cell group (201), the battery cell group (201) comprising a plurality of battery cells (20);
providing (320) a cooling system (30), the cooling system (30) being provided on a first face (2111) of the battery cell group (201);
providing (330) a signal transmission assembly (24), the signal transmission assembly (24) being provided on a second face (2112) of the battery cell group (201), the second face (2112) being adjacent to the first face (2111), the signal transmission assembly (24) comprising a busbar component (121) and an insulation layer (122), the insulation layer (122) enclosing the busbar component (121), the insulation layer (122) having holes, and the busbar component (121) being configured to be electrically connected to the battery cells (20) in the battery cell group (201) at the holes; and
providing (340) a shielding member (25), the shielding member (25) being connected to the battery cell group (201) and protruding from an edge of the first face (2111), the shielding member (25) being used to prevent condensed liquid generated by the cooling system (30) from reaching the signal transmission assembly (24).

15. An apparatus for manufacturing a battery, **characterized by** comprising a provision module (410), the provision module (410) being used for:
providing a battery cell group (201), the battery cell group (201) comprising a plurality of battery cells (20);
providing a cooling system (30), the cooling system (30) being provided on a first face (2111) of the battery cell group (201);
providing a signal transmission assembly (24), the signal transmission assembly (24) being provided on a second face (2112) of the battery cell group (201), the second face (2112) being adjacent to the first face (2111), the signal transmission assembly (24) comprising a busbar component (121) and an insulation layer (122), the insulation layer (122) enclosing the busbar component (121), the insulation layer (122) having holes, and the busbar component (121) being configured to be electrically connected to the battery cells (20) in the battery cell group (201) at the holes; and
providing a shielding member (25), the shielding member (25) being connected to the battery cell group (201) and protruding from an edge of the first face (2111), the shielding member (25) being used to prevent condensed liquid generated by the cooling system (30) from reaching the signal transmission assembly (24).

## Patentansprüche

1. Batterie, umfassend:
eine Batteriezellengruppe (201), umfassend eine Vielzahl von Batteriezellen (20);
ein Kühlsystem (30), das auf einer ersten Fläche (2111) der Batteriezellengruppe (201) bereitgestellt ist;
eine Signalübertragungsbaugruppe (24), die auf einer zweiten Fläche (2112) der Batteriezellengruppe (201) bereitgestellt ist, wobei die zweite Fläche (2112) an die erste Fläche (2111) angrenzt, die Signalübertragungsbaugruppe (24) eine Sammelschienenkomponente (121) und eine Isolierschicht (122) umfasst, die Isolierschicht (122) die Sammelschienenkomponente (121) umschließt, die Isolierschicht (122) Löcher aufweist und die Sammelschienenkomponente (121) konfiguriert ist, um an den Löchern elektrisch mit den Batteriezellen (20) in der Batteriezellengruppe (201) verbunden zu werden; und
ein Abschirmungselement (25), das mit der Batteriezellengruppe (201) verbunden ist und von einem Rand der ersten Fläche (2111) vorsteht, wobei das Abschirmungselement (25) verwendet wird, um zu verhindern, dass kondensierte Flüssigkeit, die von dem Kühlsystem (30) erzeugt wird, die Signalübertragungsbaugruppe (24) erreicht.

2. Batterie nach Anspruch 1, wobei die orthographische Projektion des Abschirmungselements (25) in einer Ebene parallel zu der ersten Fläche (2111) die orthographische Projektion der Signalübertragungsbaugruppe (24) in der Ebene parallel zu der ersten Fläche (2111) abdeckt.

3. Batterie nach Anspruch 1 oder 2, wobei ein vorstehender Abschnitt des Abschirmungselements (25), der über den Rand der ersten Fläche (2111) vorsteht, entweder parallel zur ersten Fläche (2111) ist oder

4. Batterie nach Anspruch 1 oder 2, wobei der vorstehende Abschnitt des Abschirmungselements (25), der vom Rand der ersten Fläche (2111) vorsteht, zur zweiten Fläche (2112)ⁱ hin gebogen ist und die Batterie eine Vielzahl der Batteriezellengruppen (201) umfasst,
wobei die vorstehenden Abschnitte der Abschirmungselemente (25) der beiden einander gegenüber angeordneten Batteriezellengruppen (201) miteinander verbunden sind, um eine Aussparung (251) zu bilden, wobei die Aussparung (251) zur Sammlung der kondensierten Flüssigkeit verwendet wird.

5. Batterie nach Anspruch 4, wobei der Boden der Aussparung (251) mit einem Abflussloch (252) zum Ableiten der kondensierten Flüssigkeit versehen ist.

6. Batterie nach Anspruch 4 oder 5, wobei die vorstehenden Abschnitte der Abschirmungselemente (25) der beiden einander gegenüber angeordneten Batteriezellengruppen (201) mittels eines Verbindungsstreifens zur Bildung der Aussparung (251) verbunden sind.

7. Batterie nach Anspruch 4 oder 5, wobei die Abschirmungselemente (25) der beiden einander gegenüber angeordneten Batteriezellengruppen (201) zur Bildung der Aussparung (251) einstückig ausgebildet sind.

8. Batterie nach einem der Ansprüche 1 bis 7, wobei das Abschirmungselement (25) aus einem Isoliermaterial hergestellt ist.

9. Batterie nach einem der Ansprüche 1 bis 8, wobei eine Flüssigkeitsspeichernut (113) bereitgestellt wird, die dem Abschirmungselement (25) entspricht, in einem Gehäuse der Batterie bereitgestellt ist und das Abschirmungselement (25) verwendet wird, um die kondensierte Flüssigkeit in die Flüssigkeitsspeichernut (113) einzubringen.

10. Batterie nach Anspruch 4, wobei ein Ende der Aussparung (251) mit einer Wand des Gehäuses der Batterie verbunden ist und die Aussparung (251) mit einem Hohlraum (114) in der Wand des Gehäuses in Verbindung steht, um die kondensierte Flüssigkeit in den Hohlraum (114) einzubringen.

11. Batterie nach einem der Ansprüche 1 bis 10, wobei
das Abschirmungselement (25) zwischen der ersten Fläche (2111) und dem Kühlsystem (30) fixiert ist; oder
das Abschirmungselement (25) an der zweiten Fläche (2112) fixiert ist und das Ende des Abschirmungselements (25), das sich in der Nähe des Kühlsystems (30) befindet, gebogen ist, um über den Rand der ersten Fläche (2111) hinauszuragen.

12. Batterie nach einem der Ansprüche 1 bis 11, **dadurch gekennzeichnet, dass** die Batteriezellengruppe (201) N Batteriezellenreihen (20) umfasst, die N Batteriezellenreihen (20) in einer ersten Richtung angeordnet sind, die Batteriezellen (20) in jeder Batteriezellenreihe (20) in den N Batteriezellenreihen (20) in einer zweiten Richtung angeordnet sind, die erste Richtung senkrecht zu der zweiten Richtung ist und N eine positive ganze Zahl ist,
wobei die erste Fläche (2111) senkrecht zu der ersten Richtung ist, und die zweite Fläche (2112) parallel zu einer Ebene ist, die durch die erste Richtung und die zweite Richtung bestimmt wird.

13. Stromverbrauchende Einrichtung, **dadurch gekennzeichnet, dass** sie eine Batterie nach einem der Ansprüche 1 bis 12 zum Liefern elektrischer Energie umfasst.

14. Verfahren zum Herstellen einer Batterie, **dadurch gekennzeichnet, dass** es umfasst:
Bereitstellen (310) einer Batteriezellengruppe (201), wobei die Batteriezellengruppe (201) eine Vielzahl von Batteriezellen (20) umfasst;
Bereitstellen (320) eines Kühlsystems (30), wobei das Kühlsystem (30) auf einer ersten Fläche (2111) der Batteriezellengruppe (201) bereitgestellt wird;
Bereitstellen (330) einer Signalübertragungsbaugruppe (24), wobei die Signalübertragungsbaugruppe (24) auf einer zweiten Fläche (2112) der Batteriezellengruppe (201) bereitgestellt wird, wobei die zweite Fläche (2112) an die erste Fläche (2111) angrenzt, die Signalübertragungsbaugruppe (24) eine Sammelschienenkomponente (121) und eine Isolierschicht (122) umfasst, die Isolierschicht (122) die Sammelschienenkomponente (121) umschließt, die Isolierschicht (122) Löcher aufweist und die Sammelschienenkomponente (121) konfiguriert ist, um an den Löchern elektrisch mit den Batteriezellen (20) in der Batteriezellengruppe (201) verbunden zu werden; und
Bereitstellen (340) eines Abschirmungselements (25), wobei das Abschirmungselement (25) mit der Batteriezellengruppe (201) verbunden wird und von einem Rand der ersten Fläche (2111) vorsteht, wobei das Abschirmungselement (25) verwendet wird, um zu verhindern, dass kondensierte Flüssigkeit, die von dem Kühlsystem (30) erzeugt wird, die Signalübertragungsbaugruppe (24) erreicht.

15. Einrichtung zum Herstellen einer Batterie, **dadurch gekennzeichnet, dass** sie ein Bereitstellungsmodul (410) umfasst, wobei das Bereitstellungsmodul (410) verwendet wird zum:
Bereitstellen einer Batteriezellengruppe (201), wobei die Batteriezellengruppe (201) eine Vielzahl von Batteriezellen (20) umfasst;
Bereitstellen eines Kühlsystems (30), wobei das Kühlsystem (30) auf einer ersten Fläche (2111) der Batteriezellengruppe (201) bereitgestellt wird;
Bereitstellen einer Signalübertragungsbaugruppe (24), wobei die Signalübertragungsbaugruppe (24) auf einer zweiten Fläche (2112) der Batteriezellengruppe (201) bereitgestellt wird, wobei die zweite Fläche (2112) an die erste Fläche (2111) angrenzt, die Signalübertragungsbaugruppe (24) eine Sammelschienenkomponente (121) und eine Isolierschicht (122) umfasst, die Isolierschicht (122) die Sammelschienenkomponente (121) umschließt, die Isolierschicht (122) Löcher aufweist und die Sammelschienenkomponente (121) konfiguriert ist, um an den Löchern elektrisch mit den Batteriezellen (20) in der Batteriezellengruppe (201) verbunden zu werden; und
Bereitstellen eines Abschirmungselements (25), wobei das Abschirmungselement (25) mit der Batteriezellengruppe (201) verbunden wird und von einem Rand der ersten Fläche (2111) vorsteht, wobei das Abschirmungselement (25) verwendet wird, um zu verhindern, dass kondensierte Flüssigkeit, die von dem Kühlsystem (30) erzeugt wird, die Signalübertragungsbaugruppe (24) erreicht.

## Revendications

1. Batterie, comprenant :
un groupe de cellules de batterie (201) comprenant une pluralité de cellules de batterie (20) ;
un système de refroidissement (30) disposé sur une première face (2111) du groupe de cellules de batterie (201) ;
un ensemble de transmission de signal (24) disposé sur une deuxième face (2112) du groupe de cellules de batterie (201), la deuxième face (2112) étant adjacente à la première face (2111), l'ensemble de transmission de signal (24) comprenant un composant barre omnibus (121) et une couche d'isolation (122), la couche d'isolation (122) enfermant le composant barre omnibus (121), la couche d'isolation (122) ayant des trous, et le composant barre omnibus (121) étant conçu pour être électriquement raccordé aux cellules de batterie (20) du groupe de cellules de batterie (201) au niveau des trous ; et
un élément de protection (25) raccordé au groupe de cellules de batterie (201) et faisant saillie depuis un bord de la première face (2111), l'élément de protection (25) étant utilisé pour empêcher que le liquide condensé généré par le système de refroidissement (30) atteigne l'ensemble de transmission de signal (24).

2. Batterie selon la revendication 1, dans laquelle la projection orthographique de l'élément de protection (25) dans un plan parallèle à la première face (2111) couvre la projection orthographique de l'ensemble de transmission de signal (24) dans le plan parallèle à la première face (2111).

3. Batterie selon la revendication 1 ou 2, dans laquelle une partie saillante de l'élément de protection (25) qui fait saillie depuis le bord de la première face (2111) est soit parallèle à la première face (2111) soit

4. Batterie selon la revendication 1 ou 2, dans laquelle la partie saillante de l'élément de protection (25) qui fait saillie depuis le bord de la première face (2111) est pliée en direction de la deuxième face (2112) et la batterie comprend une pluralité de groupes de cellules de batterie (201),
dans laquelle les parties saillantes des éléments de protection (25) des deux groupes de cellules de batterie (201) disposés en regard l'un par rapport à l'autre sont raccordés pour former un creux (251), le creux (251) étant utilisé pour collecter le liquide condensé.

5. Batterie selon la revendication 4, dans laquelle le fond du creux (251) est pourvu d'un trou de drainage (252) destiné à l'évacuation du liquide condensé.

6. Batterie selon la revendication 4 ou 5, dans laquelle les parties saillantes des éléments de protection (25) des deux groupes de cellules de batterie (201) disposés en regard l'un par rapport à l'autre sont raccordées au moyen d'une bande de raccordement pour former le creux (251).

7. Batterie selon la revendication 4 ou 5, dans laquelle les éléments de protection (25) des deux groupes de cellules de batterie (201) disposés en regard l'un par rapport à l'autre sont formés d'un seul tenant pour former le creux (251).

8. Batterie selon l'une quelconque des revendications 1 à 7, dans laquelle l'élément de protection (25) est constitué d'un matériau d'isolation.

9. Batterie selon l'une quelconque des revendications 1 à 8, dans laquelle une rainure de stockage de liquide (113) correspondant à l'élément de protection (25) est ménagée dans un boîtier de la batterie, et l'élément de protection (25) est utilisé pour introduire le liquide condensé dans la rainure de stockage de liquide (113).

10. Batterie selon la revendication 4, dans laquelle une extrémité du creux (251) est raccordée à une paroi du boîtier de la batterie, et le creux (251) est en communication avec une cavité (114) dans la paroi du boîtier pour introduire le liquide condensé dans la cavité (114).

11. Batterie selon l'une quelconque des revendications 1 à 10, dans laquelle l'élément de protection (25) est fixé entre la première face (2111) et le système de refroidissement (30) ; ou l'élément de protection (25) est fixé à la deuxième face (2112), et l'extrémité de l'élément de protection (25) qui est proche du système de refroidissement (30) est pliée pour faire saillie depuis le bord de la première face (2111).

12. Batterie selon l'une quelconque des revendications 1 à 11, **caractérisée en ce que** le groupe de cellules de batterie (201) comprend N rangées de cellules de batteries (20), les N rangées de cellules de batterie (20) étant agencées dans une première direction, les cellules de batterie (20) de chaque rangée de cellules de batterie (20) des N rangées de cellules de batterie (20) sont agencées dans une deuxième direction, la première direction étant perpendiculaire à la deuxième direction, et N étant un entier positif,
la première face (2111) étant perpendiculaire à la première direction, et la deuxième face (2112) étant parallèle à un plan déterminé par la première direction et la deuxième direction.

13. Appareil de consommation d'énergie, **caractérisé en ce qu'**il comprend une batterie selon l'une quelconque des revendications 1 à 12 destinée à fournir de l'énergie électrique.

14. Procédé de fabrication d'une batterie, **caractérisé en ce qu'**il comprend les étapes consistant à :
fournir (310) un groupe de cellules de batterie (201), le groupe de cellules de batterie (201) comprenant une pluralité de cellules de batterie (20) ;
fournir (320) un système de refroidissement (30), le système de refroidissement (30) étant disposé sur une première face (2111) du groupe de cellules de batterie (201) ;
fournir (330) un ensemble de transmission de signal (24), l'ensemble de transmission de signal (24) étant disposé sur une deuxième face (2112) du groupe de cellules de batterie (201), la deuxième face (2112) étant adjacente à la première face (2111), l'ensemble de transmission de signal (24) comprenant un composant barre omnibus (121) et une couche d'isolation (122), la couche d'isolation (122) enfermant le composant barre omnibus (121), la couche d'isolation (122) ayant des trous, et le composant barre omnibus (121) étant conçu pour être électriquement raccordé aux cellules de batterie (20) du groupe de cellules de batterie (201) au niveau des trous ; et
fournir (340) un élément de protection (25), l'élément de protection (25) étant raccordé au groupe de cellules de batterie (201) et faisant saillie depuis un bord de la première face (2111), l'élément de protection (25) étant utilisé pour empêcher que le liquide condensé généré par le système de refroidissement (30) atteigne l'ensemble de transmission de signal (24).

15. Appareil destiné à la fabrication d'une batterie, **caractérisé en ce qu'**il comprend un module de fourniture (410), le module de fourniture (410) étant utilisé pour :
fournir un groupe de cellules de batterie (201), le groupe de cellules de batterie (201) comprenant une pluralité de cellules de batterie (20) ;
fournir un système de refroidissement (30), le système de refroidissement (30) étant disposé sur une première face (2111) du groupe de cellules de batterie (201) ;
fournir un ensemble de transmission de signal (24), l'ensemble de transmission de signal (24) étant disposé sur une deuxième face (2112) du groupe de cellules de batterie (201), la deuxième face (2112) étant adjacente à la première face (2111), l'ensemble de transmission de signal (24) comprenant un composant barre omnibus (121) et une couche d'isolation (122), la couche d'isolation (122) enfermant le composant barre omnibus (121), la couche d'isolation (122) ayant des trous, et le composant barre omnibus (121) étant conçu pour être électriquement raccordé aux cellules de batterie (20) du groupe de cellules de batterie (201) au niveau des trous ; et
fournir un élément de protection (25), l'élément de protection (25) étant raccordé au groupe de cellules de batterie (201) et faisant saillie depuis un bord de la première face (2111), l'élément de protection (25) étant utilisé pour empêcher que le liquide condensé généré par le système de refroidissement (30) atteigne l'ensemble de transmission de signal (24).
